# EUROPEAN PATENT SPECIFICATION

(11) **EP 0 545 703 B1**
(45) Date of publication and mention of the grant of the patent: **26.08.1998**
(21) Application number: 92311025.8
(22) Date of filing: 03.12.1992
(51) Int. Cl.: F16L 55/165

(54) **Process and material for lining pipes**
Verfahren und Material zum Auskleiden von Rohren
Procédé et matériau pour le revêtement interne de tuyaux

(30) Priority: 04.12.1991 JP 348785/91; 04.04.1992 JP 112151/92; 22.06.1992 JP 188571/92
(43) Date of publication of application: 09.06.1993
(60) Divisional application: 97108580.8
(73) Proprietor: ASHIMORI INDUSTRY CO., LTD., Osaka-shi, Osaka-fu (JP); ASHIMORI ENGINEERING CO., LTD, Tokyo-to, 113 Japan (JP)
(72) Inventor: Imoto, Takayoshi, Otsu-shi, Shiga-ken 520-01 (JP); Okahashi, Toshio, Higashiosaka-shi, Osaka-hu, 577 (JP); Seshimo, Masahiro, Nishinomiya-shi, Hyogo-ken, 663 (JP); Makimoto, Hutoshi, Otsu-shi, Shiga-ken, 520-01 (JP); Onishi, Shinji, Miki-shi, Hyogo-ken, 673-05 (JP); Kitagawa, Eiji, Hushimi-ku, Kyoto-shi, Kyoto-hu, 612 (JP)
(74) Representative: Harrison, David Christopher

(56) References cited:
- EP-A- 0 290 184
- EP-A- 0 377 486
- EP-A- 0 454 309
- WO-A-83/03131
- WO-A-85/05431
- GB-A- 2 075 086

## Description

The present invention relates to a lining material for pipe lines, chiefly those buried in the ground, such as sewage pipes, which is capable of forming a rigid inner pipe for repair and/or reinforcement and to a process for providing the pipe line with such rigid inner pipe for repair and/or reinforcement. More particularly, the present invention relates to a lining material for pipe lines already constructed and buried in the ground for the purpose of their repair and/or reinforcement and to a process for providing the pipe lines with a fabric-fiber-reinforced plastic lining, which comprises inserting into the pipe lines a lining material including a sheet impregnated with a thermohardenable resin, which sheet is somewhat overlapped in both lateral end portions slidably to form a tubular sheet, inflating the lining material by introducing a pressurized fluid thereinto and internally heating the lining material to form an integrally solidified rigid inner pipe within the pipe line.

It is well known that pipe lines, irrespective of whether they are constructed on the ground or in the ground, can be lined with a fiber-reinforced plastic material for the purpose of reinforcement and/or repair. In case of pipe lines buried in the ground, they cannot easily be disturbed for lining or inspected for checking their damage. Accordingly, specialskillsand materials are needed for lining pipe lines buried in the ground, such as gas pipe lines, city water pipe lines and sewage pipe lines. In the past, various lining materials have been proposed for repair and/or reinforcement of such underground pipe lines. In recent years, a tubular mat of a strong fibrous material impregnated with a liquid thermohardenable resin, which is overlapped in both lateral end portions so as to be slidable and interposed between an inner tube and an outer film and is then heated to thicken the resin, has been proposed as a pipe-lining material - see EP-A-0 454 309. This mat itself is called according to ASTM "Sheet Molding Compound" (referred to hereinafter as SMC). This SMC lining material is manufactured, for example, by spreading a strong fibrous material such as glass fiber over a plastic film capable of easily split off, to form a fibrous mat, impregnating the fibrous mat on the film with a thermohardenable resin such as styrene or an unsaturated polyester, overlaying the mat with a tubular film and heating the mat under a controlled condition to thicken the resin by effecting partial polymerization of the resin. In this case, the resin-impregnated mat on the tubular film is overlapped in its both lateral end portions so as to be slidable in both directions to form a tubular mat. The two films on both sides of the resin-impregnated mat serves to prevent evaporation of the thermohardenable resin in the mat but the outer film is split off prior to being inserted into pipe lines.

This lining material containing SMC as main component affords, after curing, a rigid fiber-reinforced plastic (FRP) lining on the inner surface of pipe lines thereby attaining the purpose of reinforcement and/or repair of the pipe lines. However, this lining material has the drawback that when it is inserted into pipe lines, especially long or curved ones, an extremely strong force is exerted on the SMC due to frictional resistance against the inner surface of the pipe lines so that the SMC is locally stretched to reduce its thickness/or suffers from various damages, and in the extreme case, breaks down in the damaged areas. As the SMC lining material has a number of disadvantages to be overcome in addition to the above mentioned, a new type lining material was proposed in JP-A-2-95880 (EP-A-0454309) (referred to hereinafter as Ref. 1). Disclosed in Ref. 1 is a newest lining material now currently used which comprises in place of the mat of SMC a sheet comprised of a fabric and a mat of fibers of high tenacity impregnated with a thickened liquid thermohardenable resin to form a fabric-fiber-reinforced composite molding sheet (referred to hereinafter simply as FCM-sheet). This FCM-sheet is also coated on both sides with two plastic films, one of which constitutes an outermost layer capable of easily split off before insertion of the lining material into pipe lines. Stretchability of SMC by strong tension, that is one of the great disadvantages of SMC, is overcome to a certain degree by FCM-sheet since a fabric in addition to fibers is impregnated with a thermohardenable resin in case of FCM-sheet unlike SMC wherein fibers alone are impregnated with the resin so that the resultant sheet is resistant to biaxial tension. However, both SMC and FCM-sheet lining materials are common in appearance since they may be made up by overlapping both lateral end portions of the sheet material with each other to form a tubular material in such manner that the overlapped portions of the tubular material is somewhat slidable in circumferentially opposite direction in compliance with the diameter of the pipe lines. In order to facilitate insertion of the lining material into a pipe line, the diameter of the tubular sheet the lateral end portions of which are overlapped with each other is normally smaller than the inner diameter of the pipe line. However, the lining material once inserted into the pipe line is inflated to bring it into contact with the pipe line prior to curing.

An underground sewage pipe line is usually made of a porcelain pipe or a Hume concrete pipe and thus is brittle and easily broken by earthquake or by vibration from adjacent underground work. Otherwise, sewage pipe lines, if superannuated, become so brittle that they often undergo local break or rupture or are damaged to be ready to fall to pieces. When such brittle sewage pipe lines are lined with either of the SMC or FCM-sheet lining material for reinforcement, the lining material in the form of a tube formed by overlapping both lateral end portions of the sheet so as to be slidable in circumferential direction is inserted into such pipe lines and the tubular lining material is then inflated internally by fluid pressure whereby the overlapped lateral end portions slide to comply with the inner diameter, i.e. the inner circumferential length of the pipe lines. If the pipe lines have a locally broken portion, the lining materialmay he expanded out of the broken portion by internal pressure whereby the overlapped lateral end portions of the lining material are excessively slid to form a cleavage. If the pipe lines are worn out entirely, they may be ruptured over a significant length because they are pressed internally by the expanding lining material and fall to pieces locally. In this case, sliding of the overlapped lateral end portions of the lining material goes too far so that the opening may be formed between the lateral end portions of the lining material over a significant length. Although FCM-sheet can exert tension so as to be less stretchable than SMC, this phenomenon commonly occurs irrespective of whether the lining material is SMC or FCM-sheet as both materials wherein the lateral end portions are weakly bonded merely by the thickened liquid resin are less resistant to internal expansion by fluid pressure.

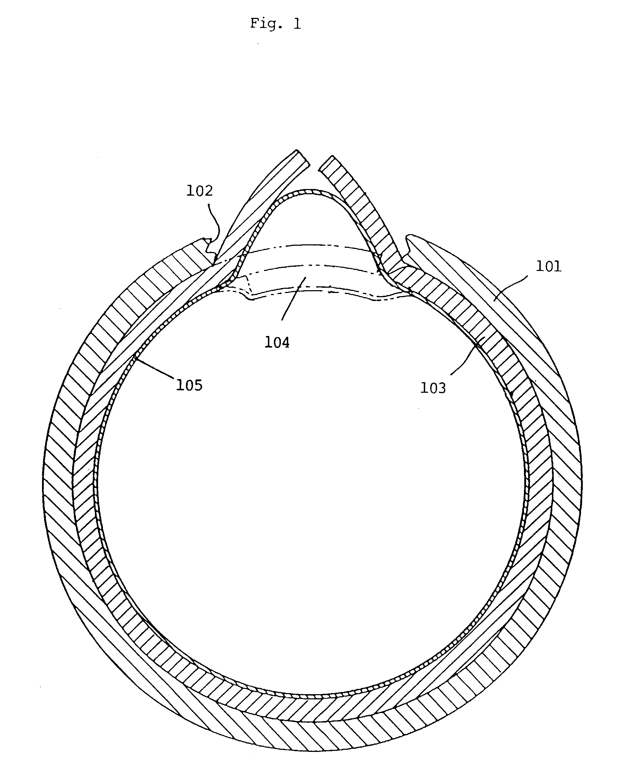

This drawback in case of using the SMC or FCM-sheet lining material can be exaggeratedly shown in the accompanying Fig. 1 wherein a lining material is inserted into a pipe line, especially a sewage pipe, having a broken portion and is inflated internally by fluid pressure. A pipe line 101 has a broken portion 102 where the lining material 103 made of SMC or FCM-sheet is spread out by fluid pressure. For exaggeration's sake, the overlapped lateral end portions 104 of the lining material is just located in the broken portion of the pipe line so that the overlapped lateral end portions which are weakly bonded by the aid of a thickened thermohardenable resin contained in the lining material are opened by the internally exerted fluid pressure. In this case, the inner tubular plastic film 105 also spread out of the broken portion 102 of the pipe line is still remaining in Fig. 1, but this tubular film 105 is locally expanded seriously and finally ruptured by the fluid pressure to permit spout of the fluid. Even if the overlapped lateral portions 104 of the lining material 103 is not located in the broken portion 102 of the pipe line 101, the lining material 103 in the broken portion 102 is expanded while permitting separation of the lateral end portions of the lining material within the pipe line 101. The remaining tubular film 105 no longer functions as a reinforcing material for the pipe line 101.

Furthermore, it is noteworthy that the pipe line is sometimes surrounded by high pressure underground water. If the pipe line has a broken portion, a large amount of water intrudes into the pipe line through the broken portion thereof so that the pipe line is flooded with water throughout. In case a lining material is applied onto the inner surface of such pipe line, the lining material is externally wetted with water so that the lining material cannot be thermocured or at least needs a long period of time for curing, even if it is internally heated.

The FCM-sheet lining material disclosed in Ref. 1 is certainly superior in mechanical strength to the SMC lining material but the former is still unsatisfactory in mechanical properties for applying it onto pipe lines. The SMC sheet in FCM-sheet is poor in strength and elongation at the time of break-down while the fabric sheet in FCM-sheet is great in strength and elongation at the time of break-down. Thus, the SMC sheet is broken down by a weaker force as compared with the fabric sheet. In case of FCM-sheet usually employed as a lining material and comprised of a SMC sheet of 4.0 mm in thickness and a fabric sheet of 0.3 mm in thickness, for example, these sheets showed the following properties: a strength at break-down of 421·83 N/cm in width and an elongation at the time of break-down of 1.8% for the SMC sheet, and a strength at the time of break-down of 2678·13 N/Scm in width and an elongation at the time of break-down of 24% for the fabric sheet. When tensile force is exerted to the SMC sheet, the force is concentrated on a relatively weak portion to incur local elongation and break-down. On the other hand, the fabric sheet shows a great elongation at the initial stage of applying tensile force due to stretching of the relaxed yarns in the fabric structure, but its resistance to tensile force rapidly increases after allowing the yarns to stretch to a certain degree. If the SMC sheet is integrally combined with the fabric sheet as in FCM-sheet the force locally exerted to the SMC sheet is dispersed so that the strength and elongation at the time of break-down is somewhat improved. In case tensile force is increased beyond a certain limit, however, the SMC sheet alone of the FCM-sheet is broken down. In the above example, the strength of the SMC sheet at the time of break-down was 559·17 N/Scm in width and its elongation was 2.4%. Accordingly, if a strong tensile force beyond a certain limit is exerted at the time of inserting the FCM-sheet lining material into pipe lines, the SMC sheet layer alone is broken, thus leading the lining treatment to failure. More specifically, the FCM-sheet lining material used for a conventional sewage pipe of 300 mm in diameter has a width of about 1000 mm and the strength of the SMC sheet layer thereof at the time of break-down is 11183·4 N(559·17 N/50 mm in width x 1000mm in width)/1000 mm in width. This apparently means that if a load of at least 1 ton is applied at the time of inserting the lining material into the pipe, there may be a possibility of the SMC sheet layer being broken down. In general, the load at the time of inserting a lining material into a pipe line depends on the length of the pipe line. Thus, a significant load is applied to a lining material In the event the lining material Is long and the pipe line is also long. If the length of a pipe line exceeds 80 meters, the maximum load applied to a lining material being inserted into the pipe line will sometimes exceed 1 ton. Further, when the pipe lines is seriously damaged or is irregular in size or is curved, the load will readily exceeds 1 ton even if the length of the pipe line is far less than 80 meters.

In general, a sewage pipe line is constructed by connecting a great number of Hume concrete pipes in series. If such Hume concrete pipes are broken locally, only damaged portions are repaired by replacing the damaged pipe with a new Hume concrete pipe. It is very common in this case that the pipe where the broken portion is formed is cut in two positions so as to remove only the broken portion and the pipes thus cut away are interconnected with a repair pipe which has an outer diameter equal to the inner diameter of the cut pipes. If such sewage pipe line has been repaired several times, therefore, the inner diameter of the pipe line varies according to the repaired positions. Accordingly, if the pipe line once repaired is again to be repaired, the second repair pipe is smaller in inner diameter than the first repair pipe. Thus, the pipe line is constructed as a whole by pipes with different diameters. If this pipe line is lined with a tubular lining material with a definite diameter, the lining material tends to form a wrinkle in the location of repair in several times where the diameter of the pipe line is considerably smaller.

Under the above circumstances, there is a technical need for improving a means for applying a lining material to pipe lines having damaged portions, especially superannuated sewage pipe lines in a simple and economical manner and also a great demand for developing a new type lining material which can be inserted into a pipe line having damaged portions without difficulty and is capable of forming a rigid fabric-fiber-reinforced plastic (FRP) lining on the inner surface of such pipe line.

Accordingly, it is an object of the present invention to provide a new lining material which can be applied onto the inner surface of a pipe line having damaged portions to form a rigid fabric-fiber-reinforced plastic lining.

It is another object of the present invention to provide a lining material capable of being inserted into a pipe line having damaged portions and capable of being thermocured to form a rigid fabric-fiber-reinforced plastic lining even if underground water has entered into the pipe line.

It is still another object of the present invention to provide a lining material capable of being inserted into a pipe line without causing any break-down of the resin-impregnated sheet under strong tensile force and capable of forming a rigid fabric-fiber-reinforced plastic lining.

It is a further object of the present invention to provide a process for providing a pipe line having damaged portions with a lining material capable of forming a rigid fabric-fiber-reinflorced plastic lining wherein the lining material is applied onto the inner surface of the pipe line and then the resin-impregnated sheet is thermocured.

It is yet further object of the present invention to provide a process for providing a pipe line, especially a sewage pipe line with a lining material capable of forming a rigid fabric-fiber-reinforced plastic lining wherein the lining material is applied onto the inner surface of a pipe line varying in diameter without formation of wrinkles.

Other objects, features and advantages of the present invention will become apparent more fully from the following description.

As a result of extensive research made for developing a new type lining material which overcomes all of the drawbacks arising when applying it, especially to sewage pipe lines, it has now been found that a valuable lining material can be obtained by providing the outer surface of the FCM-sheet with a fabric-like or net-like tubular material, which may be coated with a water-proof film, thereby enabling application of the lining material to a pipe line having broken portions without permitting expansion of the lining material from the broken portion of the pipe line because at the circumferential length of the pipe line the covering material has a strong resistance to tensile force; furthermore the fabric-fiber-reinforced composite molding sheet is composed of a plurality of separated sheet fractions in lengthwise and/or lateral direction in such manner that the lengthwise and/or lateral end portions of the individual separated sheet fractions are overlapped so as to be slidable each other in opposite directions thereby enabling insertion of the lining material into a pipe line without strong tensile force being exerted to the lining material because of absorption of such tensile force in the places where a little sliding of the individual separated sheet factions occurs.

A process for providing a pipe line system comprising a series of plural pipes having different diameters with a lining material can effectively be carried out by applying onto the inner surface of the pipe line system a lining material comprised of (a) an inner tube expansible up to the maximum circumferential length of the pipe line system which is folded in flattened state within the width corresponding to at most the minimum inner diameter of the pipe line system, (b) a fabric-fiber-reinforced composite molding sheet having a circumferential length somewhat longer than the inner circumferential length of the pipe line system having the maximum diameter which covers the outer surface of the inner tube in such manner that both lateral end portions of the sheet are overlapped each other slidably in opposite directions, and (c) a tubular covering material, inflating the lining material internally in compliance with the pipe line system and then thermocuring the sheet to form a fabric-fiber-reinforced plastic lining on the inner surface of the pipe line without permitting the formation of wrinkles. The present invention has been accomplished on the basis of the above finding.

In accordance with one embodiment of the present invention, there is provided a lining material as defined in claim 1.

In the lining material of this invention, it is preferable that the fabric is positioned in the fabric-fiber-reinforced composite molding sheet near to the outermost surface. It is also preferable in the lining material that the flexible tubular film positioned in the innermost portion is elastic and air-tight and can be expansively inflated by inner pressure exerted by a pressurized fluid.

In accordance with the first variant of the above embodiment, there is provided a lining material wherein the tubular covering material is a fabric-like material coated on at least outer surface thereof with a water-proof film.

In accordance with the invention the fabric-fiber-reinforced composite molding sheet is composed of a plurality of separated sheet fractions arranged in the lengthwise and/or lateral direction in such manner that the lengthwise and/or lateral end portions of the individual separate sheet fractions are overlapped so as to be slidable each other in opposite directions to form a composite sheet material as a whole, both lateral end portions of the composite sheet material being so overlapped that the composite sheet material may become tubular and the fabric layer may constitute the outer layer of the sheet material, and the composite sheet material is provided on the inner surface thereof with a flexible tubular film.

In accordance with a variant of the above embodiment, there is provided a lining material comprised of (a) a flexible tubular film as the innermost layer which is expansive up to the circumferential length corresponding to the maximum inner diameter of a pipe line system comprising plural pipe lines of different diameters arranged in serial and is folded several times at a folding point where the width of the folded film is within the width equal to or somewhat smaller than the minimum inner diameter of the pipe line system, (b) a mat of fibers of a high tenacity and a fabric layer integrally impregnated with a thickened liquid thermohardenable resin to form a fabric-fiber-reinforced composite molding sheet as an intermediate layer which has a circumferential length somewhat larger than the inner circumferential length corresponding to the pipe line system having the maximum diameter and covers the outer surface of the flexible tubular film, both lateral end portions of the sheet being overlapped each other slidably over a certain length and (c) a tubular covering material as the outermost layer having strong resistance to tensile force and water-resistance, the circumferential length of the lining material being equal to or somewhat smaller than the inner circumferential length of the pipe line system having the minimum diameter.

In accordance with another embodiment of the present invention, there is provided a process according to claim 7.

As is disclosed in our copending Japanese application 4-38548 (EP-A-553558) heating of the lining material to cure the thermohardenable resin may be carried out by allowing a steam nozzle for jetting superheated steam to move from one end to the other end of the pipe line or by firstly introducing a heating fluid into the lining material for preheating and then allowing a steam nozzle for jetting superheated steam to move from one end to the other end of the pipe line.

In accordance with another embodiment of the present invention, there is provided a process according to claim 8.

In the plastic lining formed on the inner surface of the pipe line, the flexible tubular film exists in the innermost position of the lining. After completion of the pipe-lining treatment, the flexible tubular film may be removed by drawing a turning belt previously attached to one terminal end of the lining material in the direction of the other terminal while everting the film. In case a fabric layer is overlaid with a mat of glass fibers, the fabric layer and the mat are together impregnated with the resin and affords, after heating, an FRP having an integrally combined fabric layer on one side.

In the present invention, it is preferred that the liquid thermohardenable resin comprises an unsaturated polyester resin or an epoxy acrylate resin each having a maximum exothermic temperature according to JIS K-6901 of at least 100°C. It is also preferable that such liquid thermohardenable resin contains styrene-butadiene-styrene block copolymer, polystyrene, polyethylene, methyl polymethacrylate, polyvinyl acetate, saturated polyester, urethane-modified saturated polyester and/or polycaprolactone as a low shrinkage additive, barium sulfate, talc, aluminum hydroxide and/or glass powder as a filler, magnesium oxide and/or magnesium hydroxide as a thickening agent, and an organic peroxide having a decomposition temperature of 60-90°C for rendering the half-life for 10 hours as a curing catalyst.

The FCM-sheet is preferably provided on the innermost surface thereof with a non-woven fabric layer whereby the non-woven fabric layer integrally combined with the resin in the resultant lining will enhance abrasion-resistance against any solid particles contained in sewage.

Examples of the fluid to be introduced into the pipe line under pressure for inflating the lining material include air, nitrogen and water. The use of water is not preferred since it is harnful in relation to the curing of the resin by heating. Most preferably is the use of compressed air.

The present invention can more fully be understood from the following description taken in conjunction with the accompanying drawings in which:
Fig. 1 is a cross sectional view exaggeratedly showing the state of a conventional lining material applied onto the inner surface of a pipe line having a broken portion;
Fig. 2 is a cross sectional view showing the state of an example of the lining material embodying this invention inserted into a pipe line having a broken portion;
Fig. 3 is a cross sectional view showing the state of a specific example of the lining material onto the inner surface of a pipe line having a broken portion;
Fig. 4 is a perspective view of another example of the lining material showing the state of being overlapped in lateral and lengthwise end portions;
Fig. 5 is a cross sectional view showing the state of simply inflating the lining material shown in Fig. 4 without a pipe line, merely for the purpose of showing the structure of the lining material;
Fig. 6 is a partially enlarged cross sectional view showing the structure of the overlapped end portions of an example of the lining material;
Fig. 7 is a diametrical section through a multi-diameter pipe system;
Fig. 8 is a cross sectional view showing a still another example of the lining material folded in flattened state;
Fig. 9 is a diametrical cross section of part of the system on a larger scale, and showing lining material in position; and
Fig. 10 shows in cross section the embodiment of Figure 7 installed in (a) a first pipe (b) a second pipe of the pipe system.

Throughout these drawings, the same reference numerals having the same meanings unless otherwise specifically indicated.

In Fig. 1, the drawbacks of the conventional lining material in case of being applied onto the inner surface of a pipe line having broken portions has already been explained.

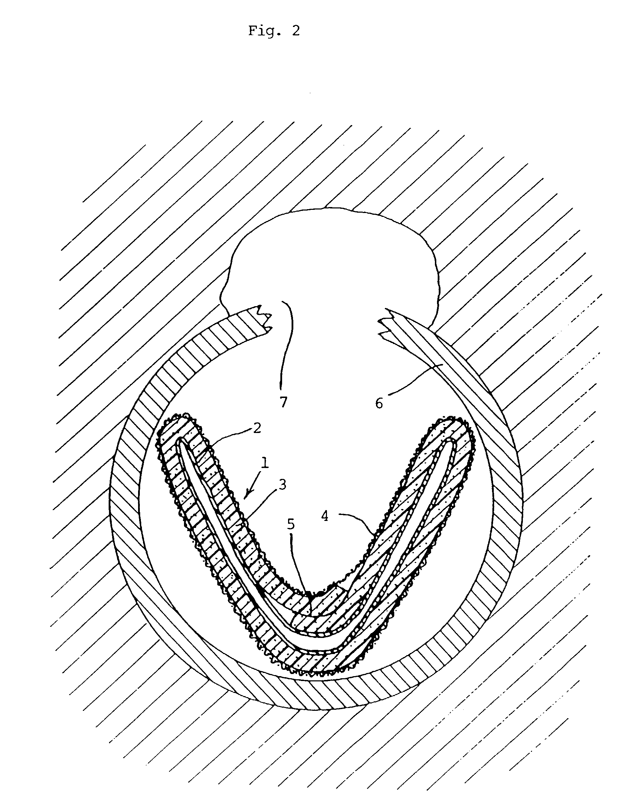

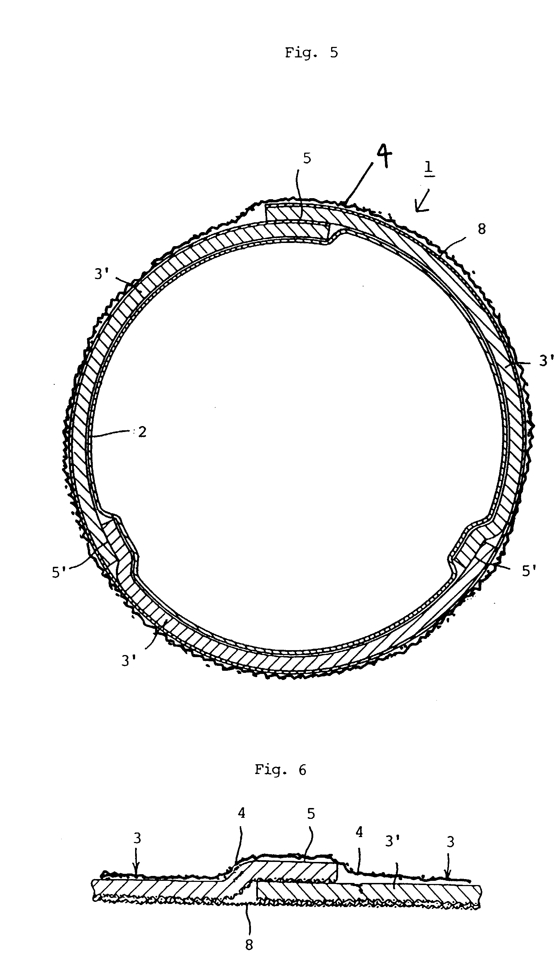

In Fig. 2 showing a typical example of the lining material of this invention in the state of being inserted in a broken pipe line, a lining material 1 comprises a flexible tubular film 2 overlaid on the outer surface thereof with a fabric-fiber-reinforced composite molding sheet 3 which is overlaid on the outer surface thereof with a tubular covering material 4. The sheet 3 has been impregnated previously with a thickened liquid thermohardenable resin and is normally prepared by impregnating the sheet 3 with a liquid thermohardenable resin and heating the sheet at a controlled temperature to effect partial polymerization of the resin. The flexible tubular film 2 is made of an elastic synthetic resin and is capable of being expansively inflated by inner pressure. Over the full length, the sheet 3 is overlapped in both lateral end portions to a certain width to form an overlapped portion 5 where the both lateral end portions are attached each other to a certain width by the aid of the thickened thermohardenable resin and are slidable in opposite directions in compliance with the inner circumferential length of a pipe line to be treated. The sheet 3 is overlaid on the outer surface with the tubular covering material 4 which is a fabric-like or net-like tubular material and is flexible and somewhat expansible by inner pressure. In case the tubular covering material 4 is a fabric-like tubular material, it may be coated at least outer surface thereof with a water-proof film to render the material water-resistant. The lining material 1 thus constructed is then inserted into a pipe line 6 having a broken portion 7 in a conventional manner, for example, a method using a drawing belt as shown in Fig. 5 of Ref. 1. In this case, the lining material 1 is introduced in laterally bent state, forming "U" or "V" shape in cross section while being kept uninflated as shown in Fig. 2.

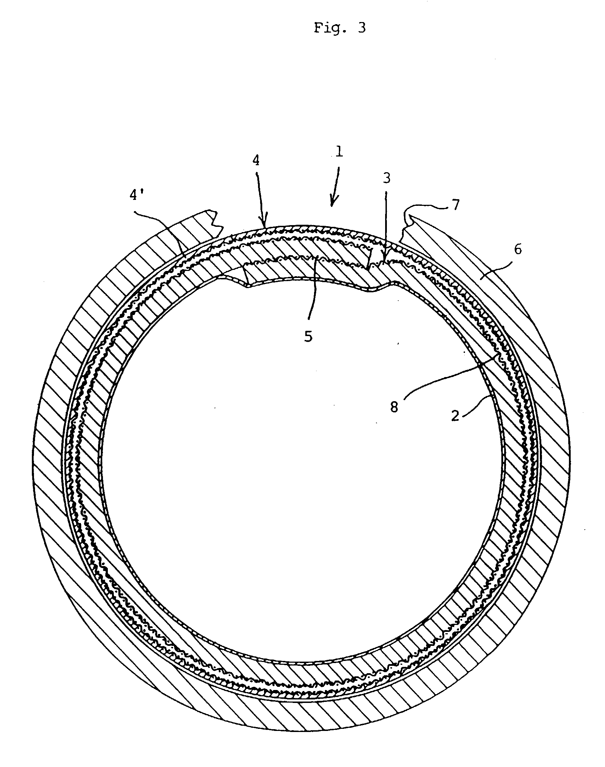

In Fig. 3 showing the state of the lining material 1 being inflated in the pipe line 6 having the broken portion 7, the lining material 1 inserted in flattened state into the pipe line 6 is inflated by pressurized fluid such as compressed air. In this case, the tubular covering material 4 constituting the outermost layer of the lining material exhibits strong resistance to tensile force exerted at the time of inflation and serves to prevent outward expansion of the lining material 1 beyond the broken portion 7 of the pipe line 6 as shown in Fig. 1. In the lining material 1 in inflated state, the sheet 3 expands in such manner that the both lateral end portions in the overlapped portion 5 are allowed to slide in opposite directions so that its outer circumferential length become equal to that of the inner surface of the pipe line 6. The flexible tubular film 2 and the tubular covering material 4 are inherently flexible and elastic so that they expands readily in accordance with expansion of the sheet 3. The tubular covering material 4 as the outermost layer of the lining material 1 can be provided on the sheet 3 by wrapping the sheet 3 which has been overlapped in both lateral end portions with the material 4 and stitching both ends of the material 4 with a yarn or the like. The lining material 1 thus laminated is preferably wrapped with a plastic film for preventing any evaporation of the liquid thermohardenable resin such as styrene in the sheet 3. This mode is particularly desirable when the material 4 is a net-like material. Such plastic film can be split off just before introducing the lining material 1 into the pipe line 6.

When the pipe line is surrounded with high pressure underground water, such water intrudes together with soil and sand into the pipe line through the broken portion 7 whereby the pipe line is wholly or partially filled with water to make thermocuring of the resin impossible or too much delayed. In an Example shown in Fig. 3, a FCM-sheet having a fabric layer 8 on the outermost layer thereof is used for the sheet 3 and a flexible fabric-like material coated on at least outer surface thereof with a water-proof film 4' is used to make the lining material water-resistant. Accordingly, no problem arises in the lining material shown in Fig. 2 with respect to the nature of ground. Thus, the lining material 1 has a water-proof film on the outermost layer, and so the use of a plastic film for preventing evaporation of a liquid thermocurable resin may be omitted in this case without any trouble.

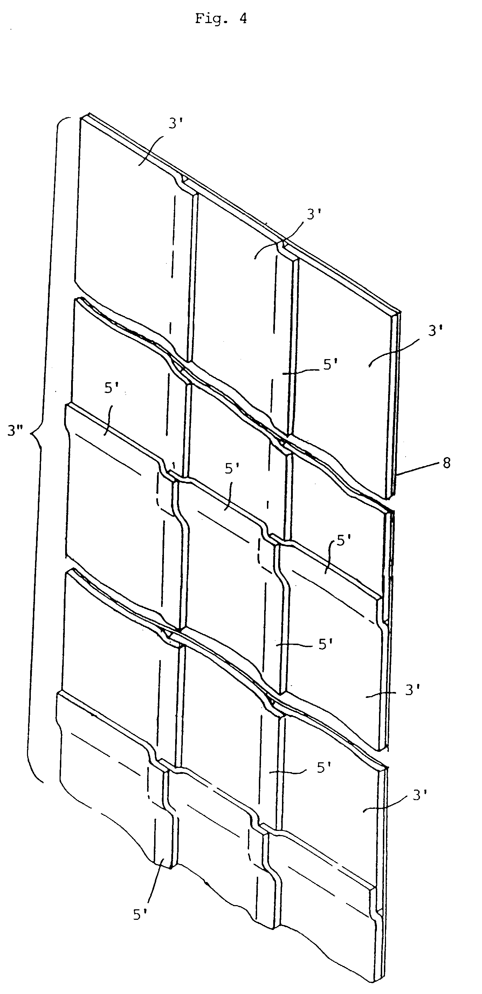

In Fig. 4 showing another example of the lining material, a fabric layer 8 is fully coated with the fiber-reinforced or fabric-fiber-reinforced composite molding sheet composed of a plurality of separated sheet fractions 3' arranged in lengthwise and/or lateral direction in such manner that the lengthwise and/or lateral end portions of the individual separate sheet fractions 3' are overlapped so as to be slidable each other to form a composite sheet material 3'' as a whole. In this case, each of the sheet fractions 3' is same in construction as the sheet 3 as in the case of Figs. 2-3, but is only different in size. In other words, the sheet material 3'' corresponding to the sheet 3 is composed of several units of the sheet fractions 3'. Accordingly, the individual sheet fraction 3' may be manufactured by simply cutting the sheet 3 in square. Both lateral end portions of the composite sheet material 3'' is so overlapped, as in the case of the sheet 3 in Fig. 2 or 3, that the composite sheet material 3'' may become tubular and the fabric layer 8 may constitute the outer layer of the sheet material. It follows that if SMC is used as the individual sheet fractions 3', the composite sheet material 3'' as a whole will become the fabric-fiber-reinforced composite molding sheet, i. e. the FCM-sheet. As in the case of the lining material shown in Figs. 2-3, the composite sheet material 3'' is provided on the inner surface thereof with the flexible tubular film 2.

The length of the individual sheet fractions 3' in lengthwise direction is preferably 30 meters or less although it varies according to the maximum load applied to the lining material in case of inserting it into a pipe line. If the length of the individual sheet 3' exceeds 30 meters, the composite sheet material may be broken down at any of the overlapped portion 5' when a strong tensile force is exerted to the sheet material because the fraction between the fabric layer 8 and the sheet fractions 3' is so great that the individual sheet fractions 3' cannot be slid in the overlapped portion 5'. The composite sheet material may be furnished with a higher resistance to tensile force by shortening the length of the individual sheet fractions 3'. If a plurality of the sheet fractions are arranged in lateral direction, 2-5 sheet fractions are generally arranged although the number may be varied according to the diameter of the pipe line to be treated and the expected size of broken portions in the pipe line. In case a pipe line has a significantly large diameter, however, it is not desirable to make the width of the individual sheet fractions 3' excessively large.

In this case, the width of the individual sheet fractions is preferably limited to not more than 1 meter although the number of the fractions exceeds 5.

In Fig. 5 showing the cross section of the inflated lining material 1 shown in Fig. 4, the lining material 1 has small overlapped portions 5' (two overlapped portions 5' in the drawing) and one overlapped portion 5 for the composite sheet material 3''. In this example, the lining material 1 has a sandwich structure wherein the sheet 3 is interposed between the flexible tubular film 2 and the fabric layer 8. In general, the width of the overlapped portion 5' of the sheet fraction 3' in lateral direction is within the range of 10-30 cm while that in lengthwise direction is within the range of 20-100 cm. In case of the composite sheet material 3'' or the sheet 3, the width of the lining material 1 in the overlapped portion 5 is generally somewhat larger than the above case and is within the range of 10-50 cm although the width may be varied according to the inner diameter of a pipe line to be treated.

In Fig. 6 showing the overlapped portion of the lining material 1, it is derived from FCM-sheet which has inherently a fabric layer 8. Accordingly, the lining material 1 has the fabric layer 8 in duplicate in the drawing and the use of the lining material in this mode is preferable. The fabric layer 8 in the FCM-sheet may be arranged so that the fabric layer 8 may be on the opposite side from that of the fabric layer 8 used for the sheet fractions. According to the conditions of the pipe line to be treated, the individual sheet fractions 3' may be wider in lateral direction but shorter in lengthwise direction or vice versa.

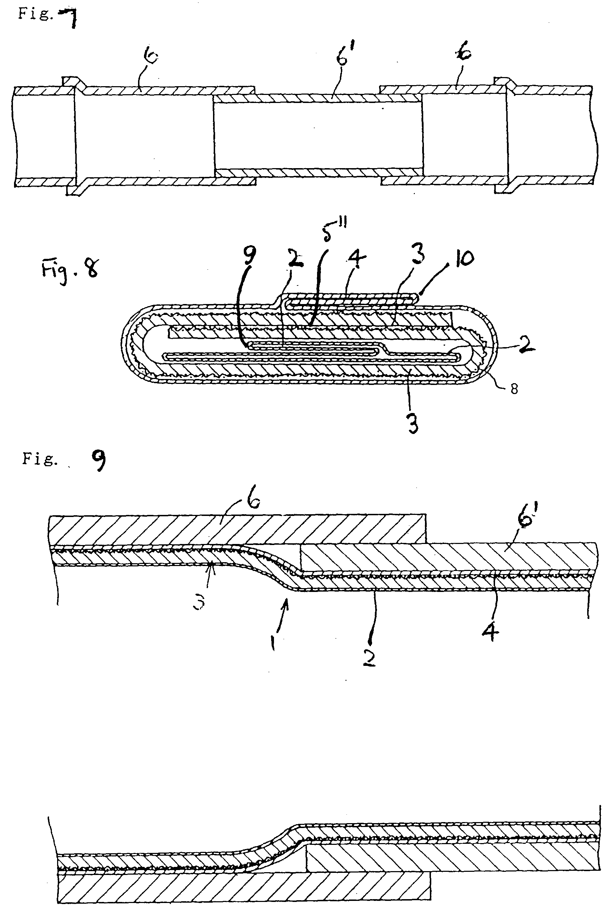

Fig. 7 shows a cross sectional view of a pipeline system of two diameters, as exhibited by pipes 6 and 6'. To allow for this variation another example of the lining material of this invention, seen in Figure 8, is composed of (a) a flexible tubular film 2 which is expansive up to the circumferential length corresponding to the maximum inner diameter of a pipe line system comprising plural pipe lines of different diameters and is folded at a folding point 9 where the width of the film (2) is within the width equal to or somewhat smaller than the minimum inner diameter of the pipe line system and (b) a mat of fibers of a high tenacity and a fabric layer integrally impregnated with a thickened liquid thermohardenable resin to form a fabric-fiber-reinforced composite molding sheet 3 which has a circumferential length somewhat larger than the inner circumferential length corresponding to the pipe line system having the maximum diameter and covers the outer surface of the flexible tubular film 2. Both lateral end portions of the sheet 3 are overlapped with each other slidably in an overlapped portion 5" and the circumferential length of the lining material 1 is equal to or somewhat smaller than the inner circumferential length of the pipe line system having the minimum diameter.

In this lining material 1, the flexible tubular film 2 constituting the innermost layer has a diameter corresponding to the pipe line having the maximum inner diameter among the pipe line system. This means that the circumferential length of the film 2 is almost equal to the circumferential length of the pipe line having the maximum diameter and that the film 2 is applicable to the pipe line of such diameter. Simultaneously, the film 2 folded several times in uninflated state at the fold 9 must have a width equal to or somewhat smaller than the width of the pipe line having the minimum diameter. This means that the film 2 can be inserted into the narrowest portion of the pipe line system. Likewise, the sheet 3 is somewhat larger in circumferential length than the pipe 6 having the larger diameter. As the sheet 3 is rather thick and so cannot be folded many times, it is overlapped in both lateral end portions in the overlapped portions 5" over a relatively longer distance so as to be slidable each other in opposite directions. The tubular covering material 4 forming the outermost layer may be water-resistant as in the lining material shown in Figs. 2 and 3 and may be folded several times in flattened state at the folding point 10 outwardly to reduce its circumferential length and diameter so that its outer circumferential length is smaller in folded state than the inner circumferential length of the pipe line having the least diameter, thus enabling insertion of the lining material 1 into the narrowest pipe 6' in the pipe line system.

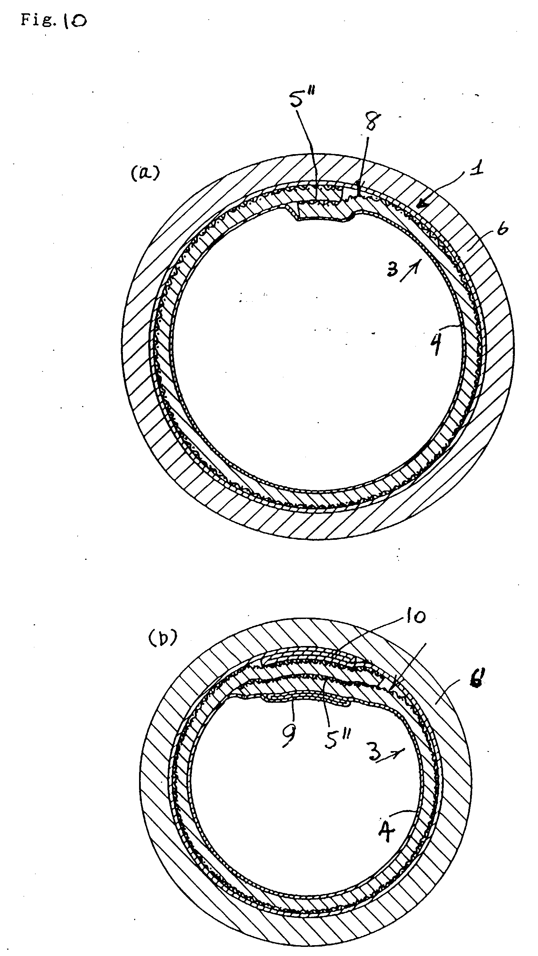

As seen in Figure 9, the material can bridge over the transitions in diameter between pipes 6 and 6'. Figure 10(a) shows how the material fits into a pipe 6 of its design diameter, while Figure 10(b) shows how in a pipe such as 6', the folds 9 and 10 may remain partially in position without detriment to the operation of the material.

According to the process of this invention, the lining material is inserted into a pipe line and inflated therein by the aid of a pressurized fluid in a conventional manner. As the lining material of this invention is overlapped in both lateral end portions slidably to reduce its circumferential length, the overlapped portions are allowed to slide in opposite directions at the time of inflation to increase its circumferential length whereby the lining material is brought into contact closely with the inner surface of the pipe line. The tubular covering material constituting the outermost layer of the lining material, i.e. the layer contacting with the inner surface of the lining material, serves to suppress spreading out of the lining material in broken portions of the lining material and/or rupture of the pipe line caused by inner pressure.

The lining material thus arranged in the pipe line is then heated to cure the thermohardenable resin as binder. By properly selecting the kind of resins, curing of the resin can be made, for example, by irradiation of ultraviolet rays. In the majority of cases, however, curing of the resin is carried out by heating. According to the process of Japanese application 4-38548 (EP-A-553 558) the lining material can be heated above 100°C without application of high pressure for curing the thermohardenable resin rapidly.

According to the present invention, a number of technical advantages can be achieved. Firstly, the lining material of this invention can be applied to sewage pipe lines having damaged portions or superannuated sewage pipe lines. In case these pipe lines are to be reinforced, care should be taken in the conventional process to prevent the drawback as shown in Fig. 1 and any rupture of the pipe line at the time of inflating the lining material therein. Since the lining material of this invention provided with the specific covering material as the outermost layer which is resistant to tensile force, any outward expansion of the lining material from broken portions of the pipe line and any rupture of superannuated pipe lines at the time of inflating the lining material can effectively be prevented.

It is also a merit of this invention that if the covering material is water-proof, intrusion of high pressure underground water through damaged portion of pipe lines can effectively be presented as shown in Fig. 3. It is known that water entering into the lining material gives bad effect on the curing of the thermohardenable resin contained therein. According to the present invention, thermocuring of the resin can be carried out rapidly without trouble since the sheet containing the resin is separated from the covering material and thermally shielded.

It is further merit of the present invention, the lining material can be inserted into pipe lines by relatively weak tensile force, especially in the embodiment shown in Fig. 4. This is due to the reason that strong tensile force is absorbed in a number of overlapped portions of the sheet fractions existing in lateral and/or lengthwise direction. Thus, the lining material is not broken down even in the event a strong tensile force is exerted thereto.

It is still another merit of the present invention that the lining material designed as shown in Fig 7 can be inserted smoothly into a pipe line system comprised of plural pipes arranged in serial having different diameters. In case the inner circumferential length of the pipe line is maximum, for example, the sheet overlapped in both lateral portions over a certain length will be slid each other in opposite directions to increase the circumferential length of the lining material. On the other hand, when the inner circumferential length of the pipe line is small, the sheet will be slid a little and the tubular film will not be increased in its circumferential length only by slightly extending of the film from its folding point.

As has been described hitherto, the technical effects and advantages achieved by the lining material and the process of this invention are outstanding and so it is obvious that the lining material of this invention is particularly suitable for the repair and/or reinforcement of sewage pipe lines.

## Claims

1. A lining material for pipe lines which comprises a flexible tubular film (2) and a resin-impregnated sheet (3) covering the outer surface of the tubular film, the resin-impregnated sheet including a mat of fibres of a high tenacity and a fabric layer (8) impregnated with a thickened liquid thermohardenable resin to form a fabric-fibre-reinforced composite molding sheet, both longitudinal edge portions (5) of the sheet overlapping each other slidably so as to make the sheet in a tubular form, characterized in that the sheet is overlaid on the outer surface thereof and over the full length thereof with a tubular covering material (4) having at a maximum circumferential length an inner circumference less than the circumferential length of the sheet (3), and a strong resistance to tensile force and in that the fabric-fibre-reinforced composite molding sheet is composed of a plurality of separated sheet fractions (3') arranged in the lengthwise and/or lateral directions in such manner that the lengthwise and/or lateral end portions (5') of the individual separate sheet fractions are overlapped so as to be slidable in relation to each other in opposite directions to form a composite sheet material as a whole, both lateral end portions of the composite sheet material being so overlapped that the composite sheet material may become tubular, and the composite sheet material is provided on the inner surface thereof with the flexible tubular film (2).

2. A lining material for pipe lines according to claim 1 wherein said fabric-fibre-reinforced sheet (3) has a circumferential length greater than the inner circumferential length of a pipe line to be treated and said tubular material (4) has a strong resistance to tensile force exerted when the lining material is inflated in the pipe line so that the outer circumferential length of the sheet (3) in tubular form becomes equal to that of the inner surface of the pipeline.

3. A lining material according to claim 1, wherein the tubular covering material (4) is selected from fabric-like and net-like tubular materials.

4. A lining material according to any of claims 1 to 3 wherein the tubular covering (4) material is a fabric-like material coated on at least outer surface thereof with a water-proof film.

5. A lining material according to any one of claims 1 to 4, wherein the lining material comprises (a) a flexible tubular film (2) as the innermost layer which is expansible up to the circumferential length corresponding to the maximum inner diameter of a pipe line system comprising plural pipe lines of different diameters arranged in series and is folded several times at a fold (9) where the width of the folded film is within the width equal to or somewhat smaller than the minimum inner diameter of the pipe line system, (b) a mat of fibres of a high tenacity and a fabric layer integrally impregnated with a thickened liquid thermohardenable resin to form a fabric-fibre-reinforced composite molding sheet as an intermediate layer which has a circumferential length somewhat larger than the inner circumferential length corresponding to the pipe line system having the maximum diameter and covers the outer surface of the flexible tubular film, both lateral end portions of the sheet being overlapped each other slidably over a certain length and (c) a tubular covering material as the outermost layer having strong resistance to tensile force and water resistance, the circumferential length of the lining material being equal to or somewhat smaller than the inner circumferential length of the pipe line system having the minimum diameter.

6. A lining material as in claim 1 wherein the fabric is positioned near to the outermost surface of the fabric-fibre-reinforced composite molding sheet.

7. A process for providing pipe lines with a fabric-fibre-reinforced plastic lining, which comprises inserting into a pipe line a lining material according to any one of claims 1 to 4, closing both terminal ends of the lining material, inflating the lining material by introducing a pressurized fluid thereinto whereby the overlapped portions of the sheet are so slid as to be contacted evenly with the inner surface of the pipe line, and thereafter heating the lining material to cure the thermohardenable resin in the sheet to form an integrally bonded fabric-fibre-reinforced plastic lining on the inner surface of the pipe line.

8. A process for providing a pipe line system with a fabric-fibre-reinforced plastic lining which includes inserting into the pipe a material according to claim 5 or claim 6, inflating the lining material by introducing pressurized fluid thereinto whereby the lining material is expanded by allowing the overlapped lateral end portions to slide in compliance with each pipe line in the system having a different diameter, and heating the sheet to cure the thermohardenable resin therein to form a fabric-fibre-reinforced plastic lining.

## Patentansprüche

1. Auskleidungsmaterial für Rohrleitungen, das einen flexiblen schlauchförmigen Film (2) und eine harzgetränkte Bahn (3) umfaßt, die die Außenfläche des schlauchförmigen Films bedeckt, wobei die harzgetränkte Bahn eine Matte aus Fasern mit hoher Zähigkeit und eine Gewebeschicht (8) umfaßt, die mit einem eingedickten flüssigen wärmehärtbaren Harz getränkt ist, um eine gewebe-faser-verstärkte Verbundformbahn zu bilden, wobei beide Längskantenabschnitte (5) der Bahn einander gleitfähig überlappen, so daß die Folie schlauchförmige Konfiguration aufweist, dadurch gekennzeichnet, daß die Bahn an ihrer Außenfläche und über ihre gesamte Länge von einem schlauchförmigen Deckmaterial (4) überlagert ist, das bei seiner maximalen Umfangslänge einen Innen-Umfang aufweist, der geringer ist als die Umfangslänge der Bahn (3) und das Zugkräften hohen Widerstand entgegensetzt, und daß die gewebe-faser-verstärkte Verbundformbahn aus einer Vielzahl getrennter Bahnabschnitte (3') besteht, die in Längs- und/oder in Querrichtung auf solche Weise angeordnet sind, daß die Endbereiche (5') in Längs- und/oder Querrichtung der einzelnen getrennten Bahnabschnitte übereinanderliegen, so daß sie in bezug aufeinander in entgegengesetzte Richtungen gleiten können, um als ganzes ein Verbundbahnmaterial zu bilden, wobei beide seitlichen Endabschnitte des Verbundbahnmaterials einander so überlappen, daß das Verbundbahnmaterial Rohrform annehmen kann, und das Verbundbahnmaterial an seiner Innenfläche mit dem flexiblen schlauchförmigen Film (2) versehen ist.

2. Auskleidungsmaterial für Rohrleitungen nach Anspruch 1, worin die Umfangslänge der gewebe-faser-verstärkten Bahn (3) größer ist als die innere Umfangslänge einer zu behandelnden Rohrleitung und das schlauchförmige Material (4) Zugkräften hohen Widerstand entgegensetzt, die ausgeübt werden, wenn das Auskleidungsmaterial in der Rohrleitung aufgeblasen wird, so daß die äußere Umfangslänge der Bahn (3) in Rohrform jener der Innenfläche der Rohrleitung gleich wird.

3. Auskleidungsmaterial nach Anspruch 1, worin das schlauchförmige Deckmaterial (4) aus gewebeartigen und netzartigen schlauchförmigen Materialien ausgewählt ist.

4. Auskleidungsmaterial nach einem der Ansprüche 1 bis 3 worin das schlauchförmige Deckmaterial (4) ein gewebeartiges Material ist, das zumindest an seiner Außenfläche mit einem wasserdichten Film beschichtet ist.

5. Auskleidungsmaterial nach einem der Ansprüche 1 bis 4, worin das Auskleidungsmaterial umfaßt: (a) einen flexiblen schlauchförmigen Film (2) als innerste Schicht, der bis zu einer Umfangslänge ausdehnbar ist, die dem maximalen Innendurchmesser eines Rohrleitungssystems entspricht, das eine Vielzahl von Rohrleitungen mit unterschiedlichem Durchmesser umfaßt, die in Serie angeordnet sind, und der mehrmals zu einer Falte (9) gefaltet ist, wobei die Breite des gefalteten Films innerhalb der Breite liegt, die dem minimalen Innendurchmesser des Rohrleitungssystems gleich oder etwas kleiner ist, (b) eine Matte aus Fasern mit hoher Zähigkeit und einer Gewebeschicht, die einstückig mit einem eingedickten flüssigen wärmehärtbaren Harz getränkt ist, um eine gewebe-faser-verstärkte Verbundformbahn als Zwischenschicht zu bilden, deren Umfangslänge etwas größer ist als die innere Umfangslänge, die dem Rohrleitungssystem mit maximalem Durchmesser entspricht, und die die Außenfläche des flexiblen schlauchförmigen Films bedeckt, wobei beide seitlichen Endbereiche der Bahn einander über eine bestimmte Länge gleitfähig überlappen, und (c) ein schlauchförmiges Deckmaterial als äußerste Schicht, das Zugkräften hohen Widerstand entgegensetzt sowie Wasserfestigkeit aufweist, wobei die Umfangslänge des Auskleidungsmaterials gleich groß wie oder etwas kleiner ist als die innere Umfangslänge des Rohrleitungssystems mit dem kleinsten Durchmesser.

6. Auskleidungsmaterial nach Anspruch 1, worin das Gewebe nahe der äußersten Oberfläche der gewebe-faser-verstärkten Verbundformfolie angeordnet ist.

7. Verfahren, um Rohrleitungen mit einer gewebe-faser-verstärkten Kunststoffauskleidung zu versehen, welches umfaßt: das Einsetzen eines Auskleidungsmaterials nach einem der Ansprüche 1 bis 4 in eine Rohrleitung, das Schließen beider Enden des Auskleidungsmaterials, das Aufblasen des Auskleidungsmaterials durch Einbringen eines unter Druck stehenden Fluids darin, wodurch die überlappten Bereiche der Bahn so zum Gleiten gebracht werden, daß sie gleichmäßig mit der Innenfläche der Rohrleitung in Kontakt kommen, und daraufhin das Erhitzen des Auskleidungsmaterials, um das wärmehärtbare Harz in der Bahn zu härten, um eine einstückig verbundene gewebe-faser-verstärkte Kunststoffauskleidung an der Innenfläche der Rohrleitung auszubilden.

8. Verfahren, um ein Rohrleitungssystem mit einer gewebe-faser-verstärkten Kunststoffauskleidung zu versehen, welches umfaßt: das Einsetzen eines Materials nach Anspruch 5 oder 6 in das Rohr, das Aufblasen des Auskleidungsmaterials durch Einbringen eines unter Druck stehenden Fluids, wodurch das Auskleidungsmaterial gedehnt wird, indem zugelassen wird, daß die überlappten seitlichen Endbereiche so gleiten, daß sie sich an jede Rohrleitung im System mit einem anderen Durchmesser anpassen, und das Erhitzen der Bahn, um das wärmehärtbare Harz darin zu härten, um eine gewebe-faser-verstärkte Kunststoffauskleidung zu bilden.

## Revendications

1. Matériau de double enveloppe pour lignes de canalisations qui comprend un film tubulaire flexible (2) et une feuille imprégnée de résine (3) couvrant la surface externe du film tubulaire, la feuille imprégnée de résine incluant une nappe de fibres d'une ténacité élevée et une couche de tissu (8) imprégnées d'une résine thermodurcissable liquide épaissie pour former une feuille de moulage composite renforcée de fibre-tissu, les deux portions de bords longitudinales (5) de la feuille se chevauchant l'une l'autre en glissement de façon à donner à la feuille une forme tubulaire, caractérisé en ce que la feuille est revêtue sur sa surface externe et sur sa longueur entière d'un matériau de couverture tubulaire (4) ayant à une longueur circonférentielle maximale une circonférence interne inférieure à la longueur circonférentielle de la feuille (3), et une résistance élevée à une force en tension et en ce que la feuille de moulage composite renforcée de fibre-tissu est composée d'une pluralité de fractions de feuilles séparées (3') arrangées dans les directions de la longueur et/ou latérales d'une manière telle que les portions d'extrémité dans le sens de la longueur et/ou latérales (5') des fractions de feuilles séparées individuelles sont en chevauchement de façon à être glissables par rapport l'une à l'autre dans des directions opposées pour former un matériau de feuille composite comme un tout, les deux portions d'extrémités latérales du matériau de feuille composite étant en chevauchement de sorte que le matériau de feuille composite peut devenir tubulaire, et le matériau de feuille composite est muni sur sa surface interne du film tubulaire flexible (2).

2. Matériau de double enveloppe pour lignes de canalisations selon la revendication 1 où ladite feuille renforcée de fibre-tissu (3) a une longueur circonférentielle supérieure à la longueur circonférentielle interne d'une ligne de canalisations à traiter et ledit matériau tubulaire (4) a une forte résistance à une force en tension exercée lorsque le matériau de double enveloppe est gonflé dans la ligne de canalisations de sorte que la longueur circonférentielle externe de la feuille (3) sous forme tubulaire devient égale à celle de la surface interne de la ligne de canalisations.

3. Matériau de double enveloppe selon la revendication 1, où le matériau de couverture tubulaire (4) est choisi parmi des matériaux tubulaires analogues à un tissu et analogues à un filet.

4. Matériau de double enveloppe selon l'une quelconque des revendications 1 à 3, où le matériau de couverture tubulaire (4) est un matériau analogue à du tissu revêtu sur au moins sa surface externe d'un film étanche à l'eau.

5. Matériau de double enveloppe selon l'une quelconque des revendications 1 à 4, où le matériau de double enveloppe comprend (a) un film tubulaire flexible (2) en tant que couche la plus interne qui est expansible jusqu'à la longueur circonférentielle correspondant au diamètre interne maximum d'un système de lignes de canalisations comprenant plusieurs lignes de canalisations de diamètres différents arrangées en série et est plié plusieurs fois à une pliure (9) où la largeur du film plié est dans la largeur égale à ou un peu plus petite que le diamètre interne minimum du système de lignes de canalisations, (b) une nappe de fibres d'une ténacité élevée et une couche de tissu intégralement imprégnées d'une résine thermodurcissable liquide épaissie pour former une feuille de moulage composite renforcée de fibre-tissu en tant que couche intermédiaire qui a une longueur circonférentielle un peu plus large que la longueur circonférentielle interne correspondant au système de lignes de canalisations ayant le diamètre maximum et couvre la surface externe du film flexible tubulaire, les deux portions d'extrémités latérales de la feuille se chevauchant l'une l'autre en glissement sur une certaine longueur et (c) un matériau de couverture tubulaire en tant que couche la plus externe ayant une résistance élevée à une force en tension et une résistance à l'eau, la longueur circonférentielle du matériau de double enveloppe étant égale à ou un peu plus petite que la longueur circonférentielle interne du système de lignes de canalisations ayant le diamètre minimum.

6. Matériau de double enveloppe selon la revendication 1, où le tissu est positionné près de la surface la plus externe de la feuille de moulage composite renforcée de fibre-tissu.

7. Procédé pour munir des lignes de canalisations d'une double enveloppe en plastique renforcée de fibre-tissu, qui comprend l'insertion dans une ligne de canalisations d'un matériau de double enveloppe selon l'une quelconque des revendications 1 à 4, la fermeture des deux extrémités terminales du matériau de double enveloppe, le gonflement du matériau de double enveloppe par introduction d'un fluide sous pression à l'intérieur, ce par quoi les portions en chevauchement de la feuille sont ainsi glissées de façon à être en contact uniformément avec la surface interne de la ligne de canalisations, et après cela le chauffage du matériau de double enveloppe pour durcir la résine thermodurcissable dans la feuille pour former une double enveloppe de plastique renforcée de fibre-tissu intégralement liée sur la surface interne de la ligne de canalisations.

8. Procédé pour munir une système de lignes de canalisations d'une double enveloppe de plastique renforcée de fibre-tissu qui inclut l'insertion dans le canalisation d'un matériau selon la revendication 5 ou la revendication 6, le gonflement du matériau de double enveloppe par introduction d'un fluide sous pression à l'intérieur, ce par quoi le matériau de double enveloppe est expansé en laissant les portions d'extrémités latérales en chevauchement en conformité avec chaque ligne de canalisations dans le système ayant un diamètre différent, et le chauffage de la feuille pour durcir la résine thermodurcissable à l'intérieur pour former une double enveloppe de plastique renforcée de fibre-tissu.
